# EUROPÄISCHE PATENTANMELDUNG

(11) **EP 4 693 839 A1**
(43) Veröffentlichungstag der Anmeldung: **11.02.2026**
(21) Anmeldenummer: 25187578.7
(22) Anmeldetag: 04.07.2025
(51) Int. Cl.: H02K 5/173, H02K 11/33, H02K 5/10

(54) **ELEKTRISCHE ANTRIEBSVORRICHTUNG MIT STIRNSEITIGER KONTAKTKÜHLUNG UND KRAFTFAHRZEUG**

(30) Priorität: 09.08.2024 DE 102024207589
(71) Anmelder: VOLKSWAGEN AG, 38440 Wolfsburg (DE)
(72) Erfinder: Löffler, Jens, 38440 Wolfsburg (DE); Koch, Philipp, 38440 Wolfsburg (DE)

(57) **Zusammenfassung**

Die vorliegende Erfindung betrifft eine elektrische Antriebsvorrichtung (1) für ein Kraftfahrzeug (2). Die elektrische Antriebsvorrichtung (1) weist eine Motorbaugruppe (3) und eine Leistungselektronikbaugruppe (4) auf, wobei die Motorbaugruppe (3) ein Motorgehäuse (5) mit einem Maschinenbereich (6) und einem Elektronikbereich (7) aufweist. In dem Maschinenbereich (6) ist eine Elektromaschine mit einem Rotor und einem Stator angeordnet, wobei der Elektronikbereich (7) durch eine Zwischenwand (8) vom Maschinenbereich (6) getrennt ist. Eine Rotorwelle (9) der Elektromaschine ist über eine erste Lagervorrichtung (10) an der Zwischenwand (8) drehbar gelagert. Die Leistungselektronikbaugruppe (4) weist eine Kühlvorrichtung (11) und eine an der Kühlvorrichtung (11) angeordnete Leistungselektronik (12) auf, wobei die Kühlvorrichtung (11) zwischen der Zwischenwand (8) und der Leistungselektronik (12) angeordnet ist. Eine sich in Umfangsrichtung erstreckende Kühlaußenwandung (13) der Kühlvorrichtung (11) kontaktiert eine Innenwandung (14) des Elektronikbereichs (7). Ferner kontaktiert eine der Kühlaußenwandung (13) benachbart angeordnete, umlaufende Stirnfläche (15) der Kühlvorrichtung (11) die Zwischenwand (8) umlaufend. Ferner betrifft die Erfindung ein Kraftfahrzeug (2) mit einem elektrischen Lenksystem (19).

## Beschreibung

Die vorliegende Erfindung betrifft eine elektrische Antriebsvorrichtung für ein Kraftfahrzeug. Ferner betrifft die Erfindung ein Kraftfahrzeug mit einem elektrischen Lenksystem.

Es sind elektrische Antriebsvorrichtungen bekannt, bei welchen eine Elektromaschine in einem Motorgehäuse und eine Leistungselektronik zum Bestromen der Elektromaschine stirnseitig am Motorgehäuse gehalten ist. Die Dokumente US 2018 / 0 178 739 A1 und
US 2018 / 0 178 829 A1 offenbaren gattungsgemäße Antriebsvorrichtungen, die stirnseitig am Motorgehäuse eine Kühlvorrichtung aufweisen, die sich von der Elektromaschine weg erstreckt und an deren Flanken Komponenten einer redundant ausgebildeten Leistungselektronik angeordnet sind. Ähnliche elektrische Antriebsvorrichtungen sind aus den Dokumenten US 2014 / 0 035 445 A1, US 2016 / 0 036 303 A1, US 2016 / 0 134 178 A1, US 2016/0218 583 A1, US 2016 / 0 304 118 A1, US 2017 / 0 217 481 A1 und US 2019 / 0 126 972 A1 bekannt.

Aus dem Dokument DE 10 2010 036 652 A1 ist eine elektrische Antriebsvorrichtung bekannt, die ein Motorgehäuse mit einem Motorgehäuseabschnitt und einem Kühlvorrichtungsabschnitt, der monolithisch mit dem Motorgehäuseabschnitt ausgebildet ist, aufweist. Am Kühlvorrichtungsabschnitt ist eine Leistungselektronik angeordnet, wobei Kondensatoren der Leistungselektronik in axialer Richtung in den Kühlvorrichtungsabschnitt hineinragen. Zum Schutz der Leistungselektronik ist eine zusätzliche Kappe vorgesehen, welche das Motorgehäuse von außen umgibt.

Ferner sind elektrische Antriebssysteme bekannt, die eine Motorbaugruppe mit einem Motorgehäuse und eine Leistungselektronikbaugruppe mit einem Gehäusedeckel aufweisen. Das Motorgehäuse weist einen Maschinenbereich, in welchem eine elektrische Maschine angeordnet ist, und einen Elektronikbereich, in welchem die Leistungselektronikbaugruppe aufgenommen ist, auf. Die Leistungselektronikbaugruppe weist eine Kühlvorrichtung auf, die dem Maschinenbereich benachbart angeordnet ist. Durch den Gehäusedeckel ist das Motorgehäuse auf einer Seite abdichtend geschlossen, sodass die elektronischen Komponenten der Leistungselektronikbaugruppe vor Umwelteinflüssen geschützt sind. Bei der Montage der Leistungselektronikbaugruppe an der Motorbaugruppe wird die Leistungselektronikbaugruppe bis zu einem Anschlag in axialer Richtung in den Elektronikbereich eingesetzt. Eine passgenau ausgebildete äußere umfängliche Wandung der Leistungselektronikbaugruppe gleitet hierbei an einer inneren Wandung des Motorgehäuses ab.

Derartige elektrische Antriebssysteme weisen einen sehr kompakten Aufbau auf und sind für die Massenfertigung gut geeignet, da die Leistungselektronikbaugruppe und die Motorbaugruppe separat, beispielsweise von verschiedenen Herstellern und/oder an verschiedenen Orten, herstellbar sowie an unterschiedlichen Orten lagerbar sind. Bei Bedarf sind diese Baugruppen dann zu einem späteren Zeitpunkt zusammenfügbar.

Bekannte elektrische Antriebssysteme mit einem derartigen Motorgehäuse haben den Nachteil, dass bei der Montage der Leistungselektronikbaugruppe an der Motorbaugruppe eine stirnseitige Kontaktkante der umfänglichen Wandung bzw. Abschnitte der umfänglichen Wandung der Leistungselektronikbaugruppe an der Innenwandung des Elektronikbereichs des Motorgehäuses entlanggleitet und hierbei Riefen in die Innenwandung ziehen kann. Hieraus können sich Späne bilden, die einen Kurzschluss auf einer Leiterplatte der Leistungselektronik bewirken können. Da sich die Späne auch erst nach mehreren Betriebsstunden des elektrischen Antriebssystems lösen können, sind derartige Produktionsfehler in der Warenausgangskontrolle nicht immer zuverlässig erkennbar.

Es ist daher Aufgabe der vorliegenden Erfindung, die voranstehend beschriebenen Nachteile bei einer elektrischen Antriebsvorrichtung für ein Kraftfahrzeug zu beheben oder zumindest teilweise zu beheben. Insbesondere ist es Aufgabe der vorliegenden Erfindung, eine elektrische Antriebsvorrichtung für ein Kraftfahrzeug und ein Kraftfahrzeug mit einem elektrischen Lenksystem zu schaffen, die auf eine einfache und kostengünstige Art und Weise Kurzschlüsse in der Leistungselektronik durch Späne vermeiden und/oder eine verbesserte Kühlung der Leistungselektronik aufweisen.

Die voranstehende Aufgabe wird durch die Patentansprüche gelöst. Demnach wird die Aufgabe durch eine elektrische Antriebsvorrichtung für ein Kraftfahrzeug mit den Merkmalen des unabhängigen Anspruchs 1 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen elektrischen Antriebsvorrichtung beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine elektrische Antriebsvorrichtung für ein Kraftfahrzeug gelöst. Die elektrische Antriebsvorrichtung weist eine Motorbaugruppe und eine Leistungselektronikbaugruppe auf, wobei die Motorbaugruppe ein Motorgehäuse mit einem Maschinenbereich und einem Elektronikbereich aufweist. In dem Maschinenbereich ist eine Elektromaschine mit einem Rotor und einem Stator angeordnet. Der Elektronikbereich ist durch eine Zwischenwand vom Maschinenbereich getrennt, wobei eine Rotorwelle der Elektromaschine über eine erste Lagervorrichtung an der Zwischenwand drehbar gelagert ist. Die Leistungselektronikbaugruppe weist eine Kühlvorrichtung und eine an der Kühlvorrichtung angeordnete Leistungselektronik auf, wobei die Kühlvorrichtung zwischen der Zwischenwand und der Leistungselektronik angeordnet ist. Eine sich in Umfangsrichtung erstreckende Kühlaußenwandung der Kühlvorrichtung kontaktiert eine Innenwandung des Elektronikbereichs. Erfindungsgemäß kontaktiert eine der Kühlaußenwandung benachbart angeordnete umlaufende Stirnfläche der Kühlvorrichtung die Zwischenwand umlaufend.

Die elektrische Antriebsvorrichtung ist vorzugsweise als Stellmotor bzw. Aktuator für eine elektrische Lenkung, wie beispielsweise ein Steer-by-wire Lenksystem, ausgebildet. Die elektrische Antriebsvorrichtung ist modular aufgebaut und weist zumindest die Motorbaugruppe und die Leistungselektronikbaugruppe auf. Die Motorbaugruppe und die Leistungselektronikbaugruppe sind somit getrennt voneinander herstellbar, beispielsweise an verschiedenen Orten, durch verschiedene Hersteller oder dergleichen. Ferner sind die Motorbaugruppe und die Leistungselektronikbaugruppe an voneinander verschiedenen Orten bzw. Bereichen eines Fertigungsbetriebs lagerbar. Durch den modularen Aufbau kann auch vorgesehen sein, dass eine Motorbaugruppe mit unterschiedlichen, beispielsweise modifizierten bzw. weiterentwickelten, Leistungselektronikbaugruppen kombinierbar ist. Ebenso ist es denkbar, dass eine Leistungselektronikbaugruppe mit mehreren unterschiedlichen, beispielsweise modifizierten bzw. weiterentwickelten, Motorbaugruppen kombinierbar ist. Somit kann Weiterentwicklung bzw. Verbesserung der Motorbaugruppe sowie der Leistungselektronikbaugruppe der elektrischen Antriebsvorrichtung im Wesentlichen getrennt voneinander erfolgen.

Die Motorbaugruppe weist das Motorgehäuse auf. Das Motorgehäuse weist vorzugsweise eine Aluminiumlegierung auf oder ist aus einer Aluminiumlegierung hergestellt. Vorzugsweise weist das Motorgehäuse eine zylindrische oder zumindest im Wesentlichen zylindrische Ausbildung mit einer Motorlängsachse auf. In dem Motorgehäuse ist die Zwischenwand angeordnet. Die Zwischenwand ist vorzugsweise monolithisch mit einer Außenwand des Motorgehäuses ausgebildet. Vorzugsweise ist die Motorlängsachse gemäß einer Flächennormalen der Zwischenwand angeordnet. Durch die Zwischenwand ist ein von der Außenwand des Motorgehäuses umgebener Innenraum in den Maschinenbereich und den Elektronikbereich unterteilt.

In dem Maschinenbereich ist ein Elektromotor der elektrischen Antriebsvorrichtung angeordnet. Der Elektromotor weist den Stator und den drehbar zum Stator gelagerten Rotor auf. Der Rotor weist einen Aktivteil mit mehreren Permanentmagneten und/oder einer Rotorwicklung und/oder einem Rotorkäfig oder dergleichen sowie eine Rotorwelle zum Weiterleiten eines Drehmoments des Elektromotors auf. Der Stator weist vorzugsweise eine Statorwicklung auf. Eine Rotationsachse des Elektromotors erstreckt sich koaxial zu Rotorwelle und vorzugsweise koaxial zur Motorlängsachse. Die Rotorwelle ist über die erste Lagervorrichtung an der Zwischenwand drehbar gelagert. Hierfür weist die Zwischenwandung vorzugsweise eine als Lagersitz ausgebildete Durchführung auf, in welcher die erste Lagervorrichtung gehalten ist. Die Rotorwelle ist vorzugsweise durch die erste Lagervorrichtung und somit auch durch die Zwischenwandung hindurchgeführt.

In dem Elektronikbereich ist die Leistungselektronikbaugruppe angeordnet. Die Leistungselektronikbaugruppe weist die Leistungselektronik auf, die vorzugsweise auf einer oder mehreren Leiterplatten angeordnet ist. Die Leistungselektronik ist an der Kühlvorrichtung angeordnet und vorzugsweise an der Kühlvorrichtung befestigt. Die Leistungselektronik ist an der Kühlvorrichtung vorzugsweise derart angeordnet, dass ein potenzieller Wärmeübergang von der Leistungselektronik an die Kühlvorrichtung möglichst hoch ist. Elektronische Bauteile der Leistungselektronik, wie beispielsweise Halbleiter, kontaktieren die Kühlvorrichtung vorzugsweise direkt oder über einen zusätzlichen Wärmeleiter, wie beispielsweise eine Wärmeleitpaste oder dergleichen.

Die Kühlvorrichtung weist vorzugsweise einen Kühlkörper auf oder ist als Kühlkörper ausgebildet. Der Kühlkörper weist vorzugsweise eine Aluminiumlegierung auf oder ist aus einer Aluminiumlegierung hergestellt. Die Kühlvorrichtung ist ausgebildet, Wärme von der Leistungselektronik aufzunehmen und an das Motorgehäuse weiterzuleiten. Hierfür kontaktiert die sich in Umfangsrichtung erstreckende Kühlaußenwandung der Kühlvorrichtung die sich um die Motorlängsachse erstreckende Innenwandung des Elektronikbereichs. Die Innenwandung und die Kühlaußenwandung weisen somit auch eine Erstreckung in axialer Richtung auf. Die Kontaktfläche zwischen der Kühlaußenwandung und der Innenwandung entspricht demnach vorzugsweise einem Hohlzylinder, wobei die Kontaktfläche auch eine oder mehrere, beispielsweise ringförmige, Unterbrechungen aufweisen kann. Eine derartige Unterbrechung kann beispielsweise durch einen umlaufenden Freistich in der Kühlaußenwandung gebildet sein. Die Innenwandung entspricht vorzugsweise einem Hohlzylinder mit einer glatten Wandung bzw. ohne Freistiche oder dergleichen. Weiter bevorzugt ist die Kühlvorrichtung über eine plastische Verformung, beispielsweise durch Rollieren des Motorgehäuses, am Motorgehäuse gehalten.

Eine Stirnfläche der Kühlvorrichtung, die zur Zwischenwand weist, ist umlaufend ausgebildet. Unter einer umlaufenden Ausbildung der Stirnfläche wird im Rahmen der Erfindung eine derartige Ausbildung der Stirnfläche verstanden, bei welcher die Motorlängsachse vollumfänglich von der Stirnfläche umgeben ist. Somit ist zwischen der Stirnfläche und der Zwischenwand eine umfänglich ununterbrochen ausgebildete Kontaktfläche bereitgestellt, durch welche das Eindringen von Fremdkörpern von einem stirnseitigen Ende der Kühlaußenwandung zur ersten Lagervorrichtung hin vermieden ist. Die Stirnfläche der Kühlvorrichtung kann dabei eine beliebige Form annehmen, durch welche die Bildung einer umlaufenden Kontaktfläche, eine bestimmungsgemäße Anordnung der Kühlvorrichtung zur ersten Lagervorrichtung sowie zur Rotorwelle gewährleistet sind.

Eine erfindungsgemäße elektrische Antriebsvorrichtung hat gegenüber herkömmlichen elektrischen Antriebsvorrichtungen den Vorteil, dass mit einfachen Mitteln sowie auf eine kostengünstige Art und Weise eine modular aufgebaute elektrische Antriebsvorrichtung bereitgestellt ist, die sich leicht unter Gewährleistung einer besonders hohen Produktqualität montieren lässt. Durch das umlaufende Kontaktieren der Zwischenwand durch die ringförmige Stirnfläche der Kühlvorrichtung ist ein Innenbereich der Kühlvorrichtung nach außen hin derart abdichtbar, dass etwaige beim Zusammenfügen der Motorbaugruppe und der Leistungselektronikbaugruppe entstehende Späne, sonstige Schmutzpartikel oder dergleichen nicht ins Innere der Kühlvorrichtung gelangen können. Auf diese Weise ist das Risiko einer nach mehreren Betriebsstunden auftretenden Beschädigung der Leistungselektronik gegenüber herkömmlichen elektrischen Antriebsvorrichtungen ohne eine derartige Kontaktfläche wesentlich reduziert. Folglich ist eine Haltbarkeit der erfindungsgemäßen elektrischen Antriebsvorrichtung gegenüber herkömmlichen elektrischen Antriebsvorrichtungen verbessert. Überdies weist die erfindungsgemäße elektrische Antriebsvorrichtung verhältnismäßig große Kontaktflächen zwischen dem Motorgehäuse und der Kühlvorrichtung auf, sodass eine Wärmeabfuhr über das Motorgehäuse und somit eine Kühlung der Leistungselektronik gegenüber herkömmlichen elektrischen Antriebsvorrichtungen wesentlich verbessert sind.

Gemäß einer bevorzugten Weiterentwicklung der Erfindung kann bei einer elektrischen Antriebsvorrichtung vorgesehen sein, dass die erste Lagervorrichtung als abgedichtete Lagervorrichtung ausgebildet ist. Im Betrieb können Schmutzpartikel oder dergleichen von außen in das Innere des Elektromotors eindringen, beispielsweise über eine zweite Lagervorrichtung, über welche die Rotorwelle an einem der ersten Lagervorrichtung sowie der Leistungselektronikbaugruppe entgegengesetzten Bereich des Motorgehäuses drehbar gelagert ist. Die Abdichtung der ersten Lagervorrichtung ist vorzugsweise derart ausgebildet, dass das Eindringen solcher Schmutzpartikel in das Innere der Kühlvorrichtung zuverlässig verhinderbar ist. Somit ist eine Beschädigung der Leistungselektronik verhinderbar. Dies hat den Vorteil, dass mit einfachen Mitteln sowie auf eine kostengünstige Art und Weise eine Haltbarkeit der erfindungsgemäßen elektrischen Antriebsvorrichtung gegenüber herkömmlichen elektrischen Antriebsvorrichtungen weiter verbessert ist.

Es ist erfindungsgemäß bevorzugt, dass die Rotorwelle über eine zweite Lagervorrichtung am Motorgehäuse drehbar gelagert ist, wobei die zweite Lagervorrichtung als abgedichtete Lagervorrichtung ausgebildet ist. Über die zweite Lagervorrichtung ist die Rotorwelle vorzugsweise an einem der ersten Lagervorrichtung sowie der Leistungselektronikbaugruppe entgegengesetzten Bereich des Motorgehäuses drehbar gelagert. Die Abdichtung der zweiten Lagervorrichtung ist vorzugsweise derart ausgebildet, dass das Eindringen von Schmutzpartikel in das Innere des Elektromotors und somit in das Innere der Kühlvorrichtung zuverlässig verhinderbar ist. Auch auf diese Weise ist eine Beschädigung der Leistungselektronik verhinderbar. Auf eine zusätzliche Abdichtung der ersten Lagervorrichtung kann somit verzichtet werden. Zur Erhöhung der Sicherheit können aber auch die erste Lagervorrichtung und die zweite Lagervorrichtung eine derartige Abdichtung aufweisen. Dies hat den Vorteil, dass mit einfachen Mitteln sowie auf eine kostengünstige Art und Weise eine Haltbarkeit der erfindungsgemäßen elektrischen Antriebsvorrichtung gegenüber herkömmlichen elektrischen Antriebsvorrichtungen weiter verbessert ist.

Weiter bevorzugt beträgt die Größe der Kontaktfläche der Kühlvorrichtung mit der Zwischenwand zwischen 50 % und 120 % der Größe der Kontaktfläche der Kühlaußenwandung mit der Innenwandung des Elektronikbereichs. Hierbei ist es bevorzugt, dass die Größe der Kontaktfläche der Kühlaußenwandung mit der Innenwandung des Elektronikbereichs etwa der Größe der Kühlaußenwandung entspricht, sodass eine möglichst hohe Wärmeabfuhr von der Kühlvorrichtung über die Kühlaußenwandung zum Motorgehäuse besteht. Ein weiterer Wärmeübergang von der Kühlvorrichtung auf das Motorgehäuse ist über die ringförmige Kontaktfläche zwischen der ringförmigen Stirnfläche der Kühlvorrichtung und der Zwischenwand gewährleistet. Dies hat den Vorteil, dass mit einfachen Mitteln sowie auf eine kostengünstige Art und Weise durch ein derartiges Größenverhältnis der Kontaktflächen eine besonders vorteilhafte sowie gleichmäßige Wärmeabfuhr von der Kühlvorrichtung auf das Motorgehäuse gewährleistet ist.

In einer besonders bevorzugten Ausgestaltung der Erfindung kann bei einer elektrischen Antriebsvorrichtung vorgesehen sein, dass zwischen der Kühlaußenwandung und der umlaufenden Stirnfläche eine Freimachung ausgebildet ist. Die Freimachung ist vorzugsweise umlaufend ausgebildet. Vorzugsweise ist die Freimachung als Fase, Rundung, Absatz oder dergleichen ausgebildet. Durch die Freimachung ist ein Einfügen der Leistungselektronikbaugruppe in den Elektronikbereich des Motorgehäuses verbessert. Eine als Fase oder Rundung ausgebildete Freimachung begünstigt ein Abgleiten der Leistungselektronikbaugruppe an der Innenwandung des Elektronikbereichs, sodass das Risiko einer Spanbildung reduziert ist. Überdies bietet eine solche Freimachung einen umlaufenden Aufnahmeraum, wenn die Stirnfläche der Kühlvorrichtung auf der Zwischenwand umlaufend aufliegt. Etwaig beim Zusammenführen entstandene Späne sowie Schmutzpartikel oder dergleichen sind in diesem Aufnahmeraum aufnehmbar und somit an einem Abwandern in das Innere der Kühlvorrichtung hinderbar. Auch ein ungewolltes Anordnen derartiger Störkörper zwischen der Stirnfläche und der Zwischenwand, durch welches ein Endanschlag der Leistungselektronikbaugruppe an der Motorbaugruppe vorverlagerbar ist, ist durch die Freimachung besser vermeidbar. Dies hat den Vorteil, dass mit einfachen Mitteln sowie auf eine kostengünstige Art und Weise eine Haltbarkeit der erfindungsgemäßen elektrischen Antriebsvorrichtung gegenüber herkömmlichen elektrischen Antriebsvorrichtungen weiter verbessert ist. Ferner ist ein passgenaues Zusammenfügen der Leistungselektronikbaugruppe an der Motorbaugruppe durch die Vermeidung einer Vorverlagerung des Endanschlags verbessert.

Vorzugsweise weist die Leistungselektronikbaugruppe einen Deckel auf, wobei die Leistungselektronik zwischen der Kühlvorrichtung und dem Deckel angeordnet ist. Der Deckel ist vorzugsweise mit der Kühlvorrichtung thermisch leitend gekoppelt. Der Deckel ist vorzugsweise zum dichtenden Schließen des Elektronikbereichs zu einer Umgebung der elektrischen Antriebsvorrichtung ausgebildet. Der Deckel weist vorzugsweise eine Aluminiumlegierung auf oder ist aus einer Aluminiumlegierung hergestellt. Der Deckel weist vorzugsweise eine oder mehrere Kontaktzonen auf, welche die Leistungselektronik kontaktieren, sodass ein zusätzlicher Wärmepfad von der Leistungselektronik nach außen bereitgestellt ist. Weiter bevorzugt weist der Deckel in axialer Richtung einen Überlappungsbereich mit dem Motorgehäuse auf. Weiter bevorzugt ist der Deckel über plastische Verformung, beispielsweise durch Rollieren des Überlappungsbereichs, am Motorgehäuse gehalten. Alternativ oder zusätzlich kann der Deckel an der Kühlvorrichtung gehalten sein, beispielsweise durch Schrauben, Pressen, Verstemmen, Kleben, Punktschweißen oder dergleichen. Dies hat den Vorteil, dass mit einfachen Mitteln sowie auf eine kostengünstige Art und Weise ein Schutz der Leistungselektronik vor äußeren Einflüssen und somit eine Haltbarkeit der erfindungsgemäßen elektrischen Antriebsvorrichtung weiter verbessert sind. Ferner ist somit eine Wärmeabfuhr der Leistungselektronik weiter verbessert.

Gemäß einer bevorzugten Ausführungsform der Erfindung kann bei einer elektrischen Antriebsvorrichtung vorgesehen sein, dass der Deckel eine umlaufende Dichtungsvorrichtung aufweist, wobei die Dichtungsvorrichtung dichtend zwischen dem Deckel und der Innenwandung des Elektronikbereichs angeordnet ist. Die Dichtungsvorrichtung ist demnach vorzugsweise an einem Abschnitt des Deckels angeordnet, welcher mit dem Motorgehäuse einen Überlappungsbereich bildet. Die Dichtungsvorrichtung ist vorzugsweise als Gummidichtung ausgebildet. Dies hat den Vorteil, dass mit einfachen Mitteln sowie auf eine kostengünstige Art und Weise ein Schutz der Leistungselektronik vor äußeren Einflüssen und somit eine Haltbarkeit der erfindungsgemäßen elektrischen Antriebsvorrichtung weiter verbessert sind.

Besonders bevorzugt ist die Kühlvorrichtung im Presssitz mit der Innenwandung im Elektronikbereich angeordnet. Demnach sind ein Außendurchmesser der Kühlaußenwandung der Kühlvorrichtung und ein Innendurchmesser des Elektronikbereichs des Motorgehäuses gemäß einer Presspassung aufeinander abgestimmt, sodass ein spielfreier Sitz der Kühlvorrichtung im Elektronikbereich gewährleistet ist. Dies hat den Vorteil, dass mit einfachen Mitteln sowie auf eine kostengünstige Art und Weise ein besonders guter Wärmeübergang von der Kühlvorrichtung auf das Motorgehäuse gewährleistet ist. Zudem hat ein Presssitz den weiteren Vorteil, dass somit eine besonders gute eine Kapselung des Inneren der Kühlvorrichtung gegenüber Umwelteinflüssen bereitgestellt ist, sodass ein Schutz der Leistungselektronik vor äußeren Einflüssen und somit eine Haltbarkeit der erfindungsgemäßen elektrischen Antriebsvorrichtung weiter verbessert sind.

Es ist erfindungsgemäß bevorzugt, dass auf der Zwischenwandung ein durch die Montage der Leistungselektronikbaugruppe in der Motorbaugruppe plastisch verformtes Wärmeleitmedium angeordnet ist. Das Wärmeleitmedium kann beispielsweise als Wärmeleitpaste, Wärmeleitgel oder dergleichen ausgebildet sein. Vorzugsweise weist das Wärmeleitmedium einen festen Zustand auf. Weiter bevorzugt ist das Wärmeleitmedium plastisch verformbar ausgebildet, sodass das Wärmeleitmedium durch das Zusammenfügen der Leistungselektronikbaugruppe und der Motorbaugruppe zumindest teilweise verdrängt ist. Erfindungsgemäß kann das Wärmeleitmedium auch in einem ausgehärteten Zustand sein, beispielsweise gemäß einem getrockneten Klebstoff oder dergleichen. Vorzugsweise überbrückt das Wärmeleitmedium in radialer Richtung einen Zwischenraum zwischen der Kühlvorrichtung und einem sich in axialer Richtung erstreckenden, zwischen der Kühlvorrichtung und der ersten Lagervorrichtung angeordnetem Lagerschild der Zwischenwand. Das Wärmeleitmedium ist derart im Elektronikbereich angeordnet, dass ein Wärmeübergang zwischen der Kühlvorrichtung auf das Motorgehäuse verbessert ist. Weiter bevorzugt ist das Wärmeleitmedium zum Binden von Schmutz, Spänen oder dergleichen ausgebildet, sodass beispielsweise bei der Montage der Leistungselektronikbaugruppe an der Motorbaugruppe entstandene Späne am Wärmeleitmedium gebunden sind. Dies hat den Vorteil, dass mit einfachen Mitteln sowie auf eine kostengünstige Art und Weise eine Wärmeabfuhr von der Leistungselektronik auf das Motorgehäuse weiter verbessert ist. Ferner sind durch das Wärmeleitmedium ein Schutz der Leistungselektronik vor äußeren Einflüssen und somit eine Haltbarkeit der erfindungsgemäßen elektrischen Antriebsvorrichtung weiter verbessert.

Gemäß einem zweiten Aspekt der Erfindung wird die Aufgabe durch ein Kraftfahrzeug mit einem elektrischen Lenksystem gelöst. Das elektrische Lenksystem weist einen Lenkgeber zum Vorgeben eines Lenkwinkels und einen Lenkaktuator zum Stellen des vorgegebenen Lenkwinkels an einer Lenkachse des Kraftfahrzeugs auf. Erfindungsgemäß weist der Lenkaktuator eine elektrische Antriebsvorrichtung gemäß dem ersten Aspekt der Erfindung auf. Der Lenkgeber kann beispielsweise ein Lenkrad, Joystick oder dergleichen aufweisen, über welchen ein Lenkbefehl eines Fahrers des Kraftfahrzeugs an das elektrische Lenksystem übermittelbar ist. Das Lenksystem ist vorzugsweise als Steer-by-wire Lenksystem ausgebildet, sodass zwischen der Lenkachse und dem Lenkgeber kein direkter mechanischer Kraftpfad besteht.

Bei dem erfindungsgemäßen Kraftfahrzeug ergeben sich sämtliche Vorteile, die bereits zu einer elektrischen Antriebsvorrichtung gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise das Kraftfahrzeug mit einem elektrischen Lenksystem bereitgestellt ist, welches eine modular aufgebaute elektrische Antriebsvorrichtung aufweist, die sich leicht unter Gewährleistung einer besonders hohen Produktqualität montieren lässt. Durch das umlaufende Kontaktieren der Zwischenwand durch die ringförmige Stirnfläche der Kühlvorrichtung ist ein Innenbereich der Kühlvorrichtung nach außen hin derart abdichtbar, dass etwaige beim Zusammenfügen der Motorbaugruppe und der Leistungselektronikbaugruppe entstehende Späne, sonstige Schmutzpartikel oder dergleichen nicht ins Innere der Kühlvorrichtung gelangen können. Auf diese Weise ist das Risiko einer nach mehreren Betriebsstunden auftretenden Beschädigung der Leistungselektronik gegenüber Kraftfahrzeugen mit elektrischen Lenksystemen, die herkömmliche elektrische Antriebsvorrichtungen aufweisen, ohne eine derartige Kontaktfläche wesentlich reduziert. Folglich ist eine Haltbarkeit des elektrischen Lenksystems gegenüber herkömmlichen elektrischen Lenksystemen verbessert. Überdies weist die elektrische Antriebsvorrichtung verhältnismäßig große Kontaktflächen zwischen dem Motorgehäuse und der Kühlvorrichtung auf, sodass eine Wärmeabfuhr über das Motorgehäuse und somit eine Kühlung der Leistungselektronik gegenüber herkömmlichen elektrischen Antriebsvorrichtungen wesentlich verbessert sind.

Eine erfindungsgemäße elektrische Antriebsvorrichtung sowie ein erfindungsgemäßes Kraftfahrzeug werden nachfolgend anhand von Zeichnungen näher erläutert. Es zeigen jeweils schematisch:
- Figur 1: in einer perspektivischen Ansicht eine Leistungselektronikbaugruppe gemäß dem Stand der Technik,
- Figur 2: in einer Schnittdarstellung einen Ausschnitt einer elektrischen Antriebsvorrichtung gemäß einer bevorzugten ersten Ausführungsform der Erfindung,
- Figur 3: in einer Schnittdarstellung einen Ausschnitt einer elektrischen Antriebsvorrichtung gemäß einer bevorzugten zweiten Ausführungsform der Erfindung, und
- Figur 4: in einer Seitenansicht eine bevorzugte Ausführungsform eines erfindungsgemäßen Kraftfahrzeugs.

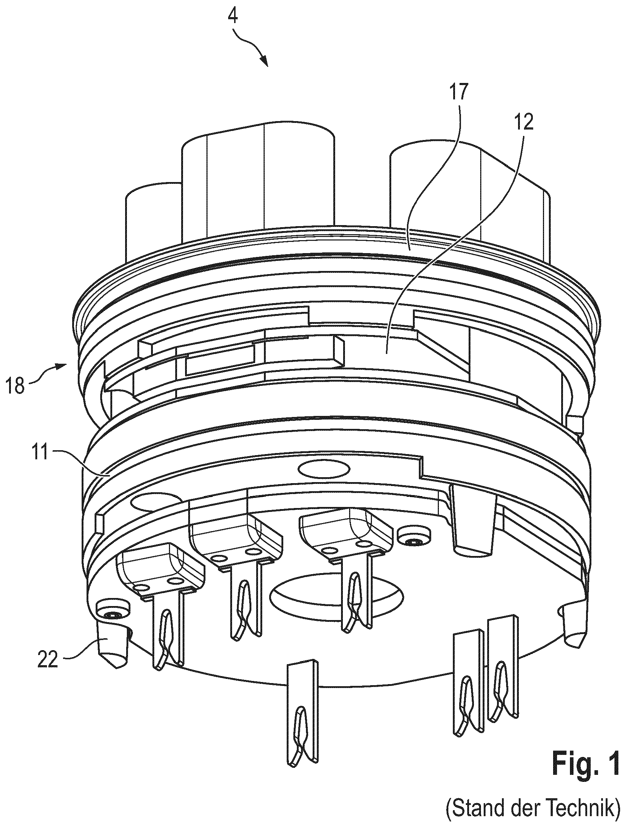

Elemente mit gleicher Funktion und Wirkungsweise sind in den Figuren 1 bis 4 jeweils mit denselben Bezugszeichen versehen.

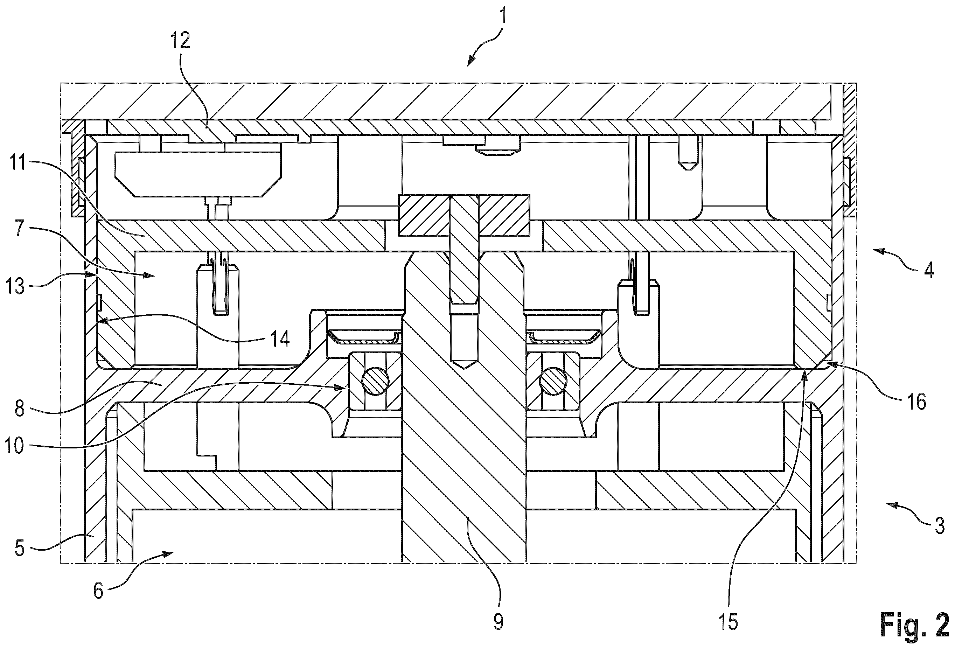

In Fig. 1 ist eine Leistungselektronikbaugruppe 4 gemäß dem Stand der Technik schematisch in einer perspektivischen Ansicht dargestellt. Die Leistungselektronikbaugruppe 4 weist eine Leistungselektronik 12 auf, die zwischen einer Kühlvorrichtung 11 und einem Deckel 17 auf der Kühlvorrichtung 11 angeordnet ist. Zum Bereitstellen eines Endanschlags beim Montieren der Leistungselektronikbaugruppe 4 an einer nicht dargestellten Motorbaugruppe 3 (vgl. Fig. 2), weist die Kühlvorrichtung 11 drei Dome 22 auf, die in axialer Richtung vom Deckel 17 wegweisen. An einer umlaufenden Seitenwandung des Deckels 17 ist eine Dichtungsvorrichtung 18 angeordnet.

Fig. 2 zeigt einen Ausschnitt einer elektrischen Antriebsvorrichtung 1 gemäß einer bevorzugten ersten Ausführungsform der Erfindung schematisch in einer Schnittdarstellung. Die elektrische Antriebsvorrichtung 1 weist eine Motorbaugruppe 3 und eine Leistungselektronikbaugruppe 4 auf. Von der Motorbaugruppe 3 sind lediglich ein Motorgehäuse 5 sowie eine Rotorwelle 9 und ein Teil einer Lagerung der Rotorwelle 9 am Motorgehäuse 5 dargestellt.

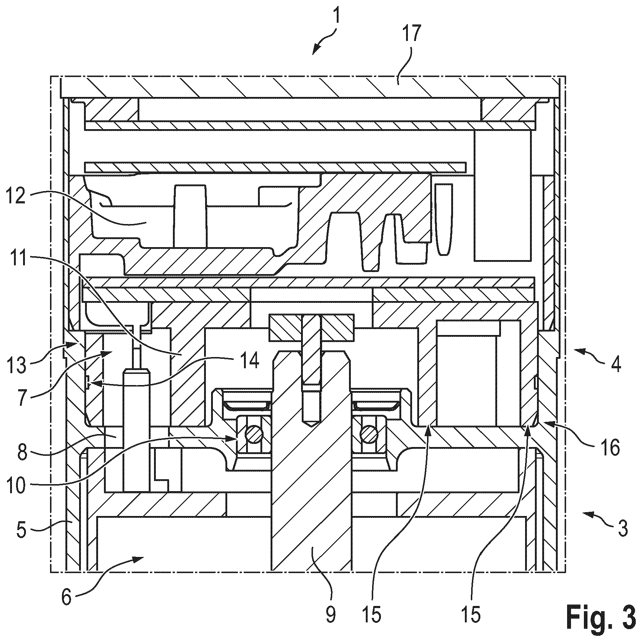

Das Motorgehäuse 5 ist zylinderförmig ausgebildet und weist im Inneren eine Zwischenwand 8 auf, durch welche ein Innenraum des Motorgehäuses 5 in einen Maschinenbereich 6, in welchem der Rotor und der Stator angeordnet sind, und einen Elektronikbereich 7 unterteilt, in welchem die Leistungselektronikbaugruppe 4 mit Ausnahme eines nicht dargestellten Deckels 17 (vgl. Fig. 3) angeordnet ist. Eine etwaige Dichtungsvorrichtung 18 (vgl. Fig. 1) zwischen dem Deckel 17 und der Innenwandung 14 ist ebenfalls nicht dargestellt. Die Zwischenwand 8 weist eine als Lagersitz ausgebildete zentrale Durchführung auf, in welcher die erste Lagervorrichtung 10 angeordnet ist. Eine Seite der Rotorwelle 9 ist über die erste Lagervorrichtung 10 drehbar am Motorgehäuse 5 gelagert.

Die Leistungselektronikbaugruppe 4 weist eine Kühlvorrichtung 11 auf, an welcher eine Leistungselektronik 12 der Leistungselektronikbaugruppe 4 gehalten ist. Eine sich in Umfangsrichtung sowie in axialer Richtung erstreckende Kühlaußenwandung 13 der Kühlvorrichtung 11 kontaktiert eine Innenwandung 14 des Motorgehäuses 5 im Elektronikbereich 7 umlaufend. Eine umlaufende Stirnfläche 15 der Kühlvorrichtung 11 kontaktiert die Zwischenwand 8 umlaufend. Die umlaufende Stirnfläche 15 ist in diesem Beispiel ringförmig ausgebildet. Auf diese Weise ist ein innerer Bereich der Kühlvorrichtung 11 gegenüber der Kühlaußenwandung 13 abgeschirmt. Zudem ist zwischen der Kühlaußenwandung 13 und der umlaufenden Stirnfläche 15 eine als Fase ausgebildete Freimachung 16 ausgebildet.

In Fig. 3 ist ein Ausschnitt einer elektrischen Antriebsvorrichtung 1 gemäß einer bevorzugten zweiten Ausführungsform der Erfindung schematisch in einer Schnittdarstellung abgebildet. Die elektrische Antriebsvorrichtung 1 gemäß der bevorzugten zweiten Ausführungsform der Erfindung unterscheidet sich von der elektrischen Antriebsvorrichtung 1 gemäß der bevorzugten zweiten Ausführungsform in einer Ausbildung der Stirnfläche 15. In diesem Ausführungsbeispiel ist die Stirnfläche 15 unregelmäßig ausgebildet, sodass eine gesamte Kontaktfläche zwischen der Stirnfläche 15 und der Zwischenwand 8 gegenüber der bevorzugten ersten Ausführungsform vergrößert ist. Ferner ist in dieser Ansicht ein Deckel 17 dargestellt, durch welchen im Zusammenspiel mit dem Motorgehäuse 5 der Elektronikbereich 7 gegenüber einer Umgebung der elektrischen Antriebsvorrichtung 1 abgedichtet ist. Eine etwaige Dichtungsvorrichtung 18 (vgl. Fig. 1) zwischen dem Deckel 17 und der Innenwandung 14 ist nicht dargestellt.

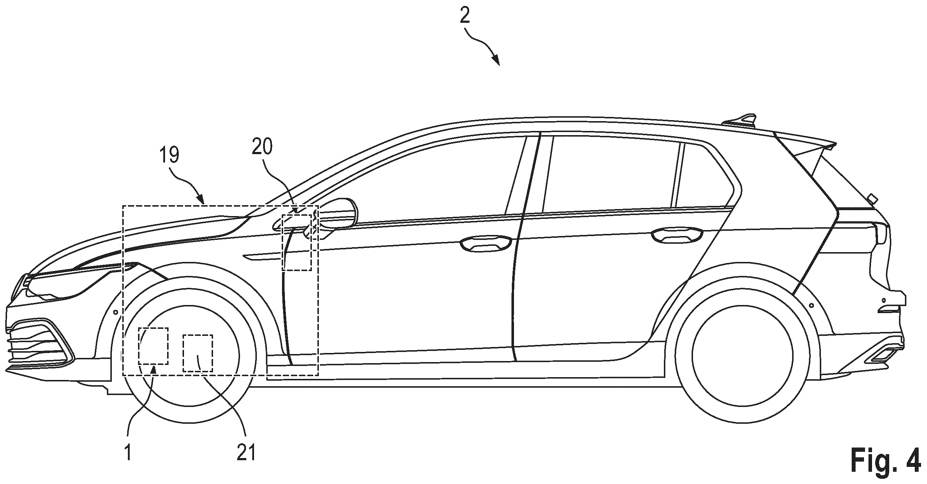

Fig. 4 zeigt eine bevorzugte Ausführungsform eines erfindungsgemäßen Kraftfahrzeugs 2 schematisch in einer Seitenansicht. Das Kraftfahrzeug 2 weist ein elektrisches Lenksystem 19 mit einem als Lenkrad ausgebildeten Lenkgeber 20 und einer lenkbaren Lenkachse 21 auf. Zum Einstellen eines Lenkwinkels der Lenkachse 21 weist das elektrische Lenksystem 19 einen als erfindungsgemäße elektrische Antriebsvorrichtung 1 ausgebildeten Aktuator bzw. einen Aktuator mit einer erfindungsgemäßen elektrischen Antriebsvorrichtung 1 auf.

### Bezugszeichenliste

- 1: elektrische Antriebsvorrichtung
- 2: Kraftfahrzeug
- 3: Motorbaugruppe
- 4: Leistungselektronikbaugruppe
- 5: Motorgehäuse
- 6: Maschinenbereich
- 7: Elektronikbereich
- 8: Zwischenwand
- 9: Rotorwelle
- 10: erste Lagervorrichtung
- 11: Kühlvorrichtung
- 12: Leistungselektronik
- 13: Kühlaußenwandung
- 14: Innenwandung
- 15: umlaufende Stirnfläche
- 16: Freimachung
- 17: Deckel
- 18: Dichtungsvorrichtung
- 19: elektrisches Lenksystem
- 20: Lenkgeber
- 21: Lenkachse
- 22: Dom

## Patentansprüche

1. Elektrische Antriebsvorrichtung (1) für ein Kraftfahrzeug (2), aufweisend eine Motorbaugruppe (3) und eine Leistungselektronikbaugruppe (4), wobei die Motorbaugruppe (3) ein Motorgehäuse (5) mit einem Maschinenbereich (6) und einem Elektronikbereich (7) aufweist, wobei in dem Maschinenbereich (6) eine Elektromaschine mit einem Rotor und einem Stator angeordnet ist, wobei der Elektronikbereich (7) durch eine Zwischenwand (8) vom Maschinenbereich (6) getrennt ist, wobei eine Rotorwelle (9) der Elektromaschine über eine erste Lagervorrichtung (10) an der Zwischenwand (8) drehbar gelagert ist, wobei die Leistungselektronikbaugruppe (4) eine Kühlvorrichtung (11) und eine an der Kühlvorrichtung (11) angeordnete Leistungselektronik (12) aufweist, wobei die Kühlvorrichtung (11) zwischen der Zwischenwand (8) und der Leistungselektronik (12) angeordnet ist, wobei eine sich in Umfangsrichtung erstreckende Kühlaußenwandung (13) der Kühlvorrichtung (11) eine Innenwandung (14) des Elektronikbereichs (7) kontaktiert,
**dadurch gekennzeichnet,**
**dass** eine der Kühlaußenwandung (13) benachbart angeordnete, umlaufende Stirnfläche (15) der Kühlvorrichtung (11) die Zwischenwand (8) umlaufend kontaktiert.

2. Elektrische Antriebsvorrichtung (1) nach Anspruch 1,
**dadurch gekennzeichnet,**
**dass** die erste Lagervorrichtung (10) als abgedichtete Lagervorrichtung ausgebildet ist.

3. Elektrische Antriebsvorrichtung (1) nach Anspruch 1 oder 2,
**dadurch gekennzeichnet,**
**dass** die Rotorwelle (9) über eine zweite Lagervorrichtung am Motorgehäuse (5) drehbar gelagert ist, wobei die zweite Lagervorrichtung als abgedichtete Lagervorrichtung ausgebildet ist.

4. Elektrische Antriebsvorrichtung (1) nach einem der vorangegangenen Ansprüche,
**dadurch gekennzeichnet,**
**dass** die Größe der Kontaktfläche der Kühlvorrichtung (11) mit der Zwischenwand (8) zwischen 50 % und 120 % der Größe der Kontaktfläche der Kühlaußenwandung (13) mit der Innenwandung (14) des Elektronikbereichs (7) beträgt.

5. Elektrische Antriebsvorrichtung (1) nach einem der vorangegangenen Ansprüche,
**dadurch gekennzeichnet,**
**dass** zwischen der Kühlaußenwandung (13) und der umlaufenden Stirnfläche (15) eine Freimachung (16) ausgebildet ist.

6. Elektrische Antriebsvorrichtung (1) nach einem der vorangegangenen Ansprüche,
**dadurch gekennzeichnet,**
**dass** die Leistungselektronikbaugruppe (4) einen Deckel (17) aufweist, wobei die Leistungselektronik (12) zwischen der Kühlvorrichtung (11) und dem Deckel (17) angeordnet ist.

7. Elektrische Antriebsvorrichtung (1) nach Anspruch 6,
**dadurch gekennzeichnet,**
**dass** der Deckel (17) eine umlaufende Dichtungsvorrichtung (18) aufweist, wobei die Dichtungsvorrichtung (18) dichtend zwischen dem Deckel (17) und der Innenwandung (14) des Elektronikbereichs (7) angeordnet ist.

8. Elektrische Antriebsvorrichtung (1) nach einem der vorangegangenen Ansprüche,
**dadurch gekennzeichnet,**
**dass** die Kühlvorrichtung (11) im Presssitz mit der Innenwandung (14) im Elektronikbereich (7) angeordnet ist.

9. Elektrische Antriebsvorrichtung (1) nach einem der vorangegangenen Ansprüche,
**dadurch gekennzeichnet,**
**dass** auf der Zwischenwandung (8) ein durch die Montage der Leistungselektronikbaugruppe (4) in der Motorbaugruppe (3) plastisch verformtes Wärmeleitmedium angeordnet ist.

10. Kraftfahrzeug (2) mit einem elektrischen Lenksystem (19), wobei das elektrische Lenksystem (19) einen Lenkgeber (20) zum Vorgeben eines Lenkwinkels und einen Lenkaktuator zum Stellen des vorgegebenen Lenkwinkels an einer Lenkachse (21) des Kraftfahrzeugs (2) aufweist,
**dadurch gekennzeichnet,**
**dass** der Lenkaktuator eine elektrische Antriebsvorrichtung (1) nach einem der vorangegangenen Ansprüche aufweist.
